# EUROPEAN PATENT APPLICATION

(11) **EP 4 701 054 A1**
(43) Date of publication of application: **25.02.2026**
(21) Application number: 23934028.4
(22) Date of filing: 19.04.2023
(51) Int. Cl.: H02K 11/01

(54) **ROTARY ELECTRIC MACHINE DEVICE AND ELECTRIC POWER STEERING DEVICE**

(71) Applicant: Mitsubishi Electric Mobility Corporation, Tokyo 100-8310 (JP)
(72) Inventor: SASAHARA, Ryutaro, Tokyo 100-8310 (JP); KAWAGUCHI, Takahisa, Tokyo 100-8310 (JP); KATO, Hiroyuki, Tokyo 100-8310 (JP); YAMANE, Sho, Tokyo 100-8310 (JP)
(74) Representative: Hoffmann Eitle
(86) International application number: PCT/JP2023/015556
(87) International publication number: WO 2024/218882

(57) **Abstract**

A rotary electric device of the present disclosure includes: a rotary electric machine including a rotating shaft; a control unit disposed side by side with the rotary electric machine in an axial direction along an axis of the rotating shaft and configured to control the rotary electric machine; and an electromagnetic shield covering the control unit. The control unit includes a control board extending in the axial direction, an external connection terminal being connected to the control board, and a filter configured to attenuate a noise component to be propagated to the external connection terminal. The electromagnetic shield is formed in a tubular shape covering the entire control board and including a first top portion provided with a through-hole into which the external connection terminal is inserted, and a second top portion disposed closer to the rotary electric machine than the first top portion. At least a part of the filter is mounted on the control board and is disposed between the first top portion and the second top portion in the axial direction.

## Description

### Technical Field

The present disclosure relates to a rotary electric device and an electric power steering device.

### Background Art

In the related art, a rotary electric device in which a rotary electric machine and a control unit are integrated is known. For example, the rotary electric machine and the control unit are disposed side by side in the axial direction along an axis of a rotating shaft of the rotary electric machine. The control unit includes a power module that supplies a current to a winding of the rotary electric machine, and a control board on which a control circuit unit that controls the power module is mounted. The rotary electric device of Patent Document 1 adopts a so-called vertical disposition method in which the power module and the control board are disposed in the axial direction. The rotary electric device of Patent Document 2 adopts a so-called horizontal disposition method in which the power module and the control board are disposed in a direction perpendicular to the axial direction.

### Citation List

### Patent Documents

Patent Document 1: Japanese Patent No. 6608555
Patent Document 2: PCT International Publication No. WO2018/047342
Patent Document 3: PCT International Publication No. WO2021/192202

### Summary of Invention

### Problem to be Solved by the Invention

In the rotary electric device, noise is generated from the control unit. In the rotary electric device of Patent Document 3, a filter and an electromagnetic shield are provided in order to limit noise generated in the control unit from propagating to the outside of the rotary electric device. In the configuration of Patent Document 3, a part of the control board penetrates the electromagnetic shield and protrudes to the outside of the electromagnetic shield, and the filter is disposed on the protruding portion. In this case, a through-hole formed in the electromagnetic shield becomes large, and noise generated in the control unit may leak to the outside through the through-hole.

In consideration of the above circumstances, an object of the present disclosure is to provide a rotary electric device and an electric power steering device capable of limiting propagation of noise generated in a control unit to an outside of the rotary electric device while limiting an increase in size of the rotary electric device.

### Means to Solve the Problem

One aspect of a rotary electric device according to the present disclosure includes: a rotary electric machine including a rotating shaft; a control unit disposed side by side with the rotary electric machine in an axial direction along an axis of the rotating shaft and configured to control the rotary electric machine; and an electromagnetic shield covering the control unit, in which the control unit includes a control board extending in the axial direction, an external connection terminal being connected to the control board, and a filter configured to attenuate a noise component to be propagated to the external connection terminal, the electromagnetic shield is formed in a tubular shape covering the entire control board and including a first top portion provided with a through-hole into which the external connection terminal is inserted, and a second top portion disposed closer to the rotary electric machine than the first top portion, and at least a part of the filter is mounted on the control board and is disposed between the first top portion and the second top portion in the axial direction.

One aspect of an electric power steering device according to the present disclosure includes the above rotary electric device.

### Effects of the Invention

According to the present disclosure, it is possible to provide a rotary electric device and an electric power steering device capable of limiting propagation of noise generated in a control unit to an outside of the rotary electric device while limiting an increase in size of the rotary electric device.

### Brief Description of Drawings

[FIG. 1] A circuit diagram of a rotary electric device according to a first embodiment.
[FIG. 2] A cross-sectional view showing a configuration of the rotary electric device according to the first embodiment.
[FIG. 3] A plan view of an electromagnetic shield according to the first embodiment.
[FIG. 4] A plan view of the rotary electric device according to the first embodiment, that is a view showing a state in which a housing and the electromagnetic shield are removed.
[FIG. 5] A partial cross-sectional view of the rotary electric device according to the first embodiment.
[FIG. 6] A view of a control board according to the first embodiment as viewed in a first orthogonal direction.
[FIG. 7] A plan view of an electromagnetic shield according to a modification example of the first embodiment.
[FIG. 8] A partial cross-sectional view of a rotary electric device according to a second embodiment.
[FIG. 9] A partial cross-sectional view of a rotary electric device according to a third embodiment.
[FIG. 10] A view of a control board according to a fourth embodiment as viewed in a first orthogonal direction.
[FIG. 11] A partial cross-sectional view of a rotary electric device according to a fifth embodiment.
[FIG. 12] A partial cross-sectional view of a rotary electric device according to a sixth embodiment.
[FIG. 13] A partial cross-sectional view of a rotary electric device according to a seventh embodiment.
[FIG. 14] A circuit diagram of a rotary electric device according to an eighth embodiment.
[FIG. 15] A cross-sectional view showing a configuration of the rotary electric device according to the eighth embodiment.
[FIG. 16] A view of a control board according to the eighth embodiment as viewed in a first orthogonal direction.
[FIG. 17] A view of a control board according to a modification example of the eighth embodiment as viewed in the first orthogonal direction.
[FIG. 18] A schematic configuration diagram of an electric power steering device according to a ninth embodiment.

### Description of Embodiments

Hereinafter, embodiments of the present disclosure will be described with reference to the drawings. The scope of the present disclosure is not limited to the following embodiment, and can be changed in any way within the scope of technical ideas of the present disclosure.

### First Embodiment.

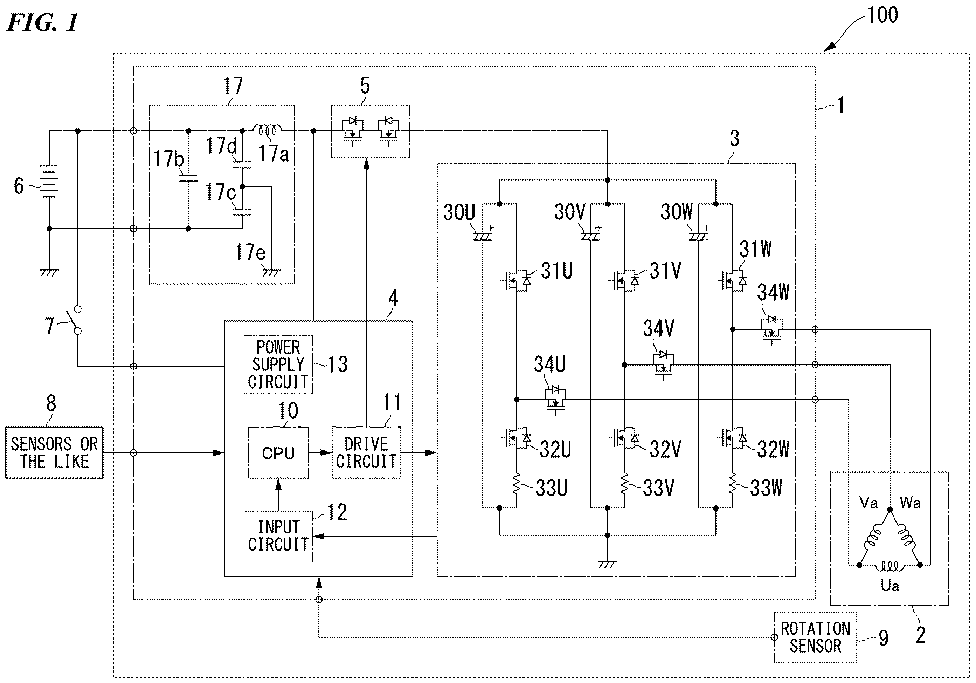

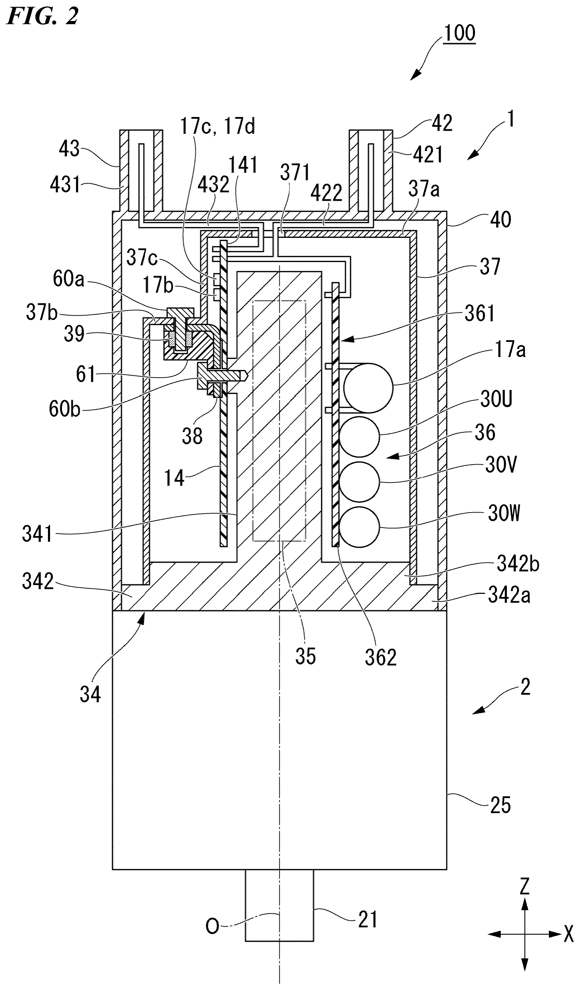

FIG. 1 is a circuit diagram of a rotary electric device 100 in a first embodiment. FIG. 2 is a cross-sectional view of the rotary electric device 100.

As shown in FIGS. 1 and 2, the rotary electric device 100 includes a control unit 1 and a rotary electric machine 2. The control unit 1 and the rotary electric machine 2 are integrated with each other. The rotary electric device 100 is used, for example, for an electric power steering device mounted on a vehicle. The rotary electric device 100 may have a function of generating power by driving a load and using the regenerative power for battery charging.

As shown in FIG. 1, the control unit 1 includes an inverter circuit 3, a control circuit unit 4, a power supply relay switching element 5, a filter 17, and the like. A battery 6 (power supply), an ignition switch 7, and sensors 8 or the like are connected to the control unit 1. The sensors 8 or the like include, for example, a steering angle sensor that is provided in the vicinity of a steering wheel of a vehicle and detects a steering angle, a torque sensor that detects a steering torque, a speed sensor that detects a traveling speed of the vehicle, and the like.

The rotary electric machine 2 is, for example, a three-phase brushless rotary electric machine. The three phases are a U phase, a V phase, and a W phase. The rotary electric machine 2 has three-phase windings. In FIG. 1, the three-phase windings are represented by reference numerals Ua, Va, and Wa. The three-phase windings Ua, Va, and Wa are deltaconnected. The three-phase windings Ua, Va, and Wa may be Y-connected. The rotary electric machine 2 may be a two-pole and two-pair brushed rotary electric machine. The rotary electric machine 2 is provided with a rotation sensor 9 for detecting a rotation angle of a rotating shaft 21 (see FIG. 2) of the rotary electric machine 2.

The inverter circuit 3 includes smoothing capacitors 30U, 30V, and 30W, upper arm switching elements 31U, 31V, and 31W, lower arm switching elements 32U, 32V, and 32W, shunt resistors 33U, 33V, and 33W, and rotary electric machine relay switching elements 34U, 34V, and 34W, which are provided corresponding to the three-phase windings Ua, Va, and Wa, respectively. In the inverter circuit 3, the circuit configurations corresponding to the U phase, the V phase, and the W phase are the same. Therefore, in the following, the U phase will be described by representing these three phases. That is, the following description is similarly applied to the V phase and the W phase.

The upper arm switching element 31U is electrically connected to a positive electrode of the battery 6, and the lower arm switching element 32U is electrically connected to a negative electrode of the battery 6. The upper arm switching element 31U and the lower arm switching element 32U are connected in series. The rotary electric machine relay switching element 34U is connected between the upper arm switching element 31U and the lower arm switching element 32U. The rotary electric machine relay switching element 34U switches on and off the power supply from a portion between the upper arm switching element 31U and the lower arm switching element 32U toward the winding Ua of the rotary electric machine 2. The smoothing capacitor 30U has a function of limiting a power supply voltage fluctuation and noise during switching. The shunt resistor 33U is connected between the lower arm switching element 32U and the ground. The shunt resistor 33U is used to detect a current flowing through the winding Ua of the rotary electric machine 2.

The control circuit unit 4 controls the inverter circuit 3. The control circuit unit 4 includes a central processing unit (CPU) 10, a drive circuit 11, an input circuit 12, a power supply circuit 13, and the like.

Power is supplied from the battery 6 to the power supply circuit 13 by an ignition signal from the ignition switch 7. The power supply circuit 13 generates a power supply voltage for normally operating each electronic component constituting the control unit 1 by using the power supplied from the battery 6. The power from the battery 6 is also supplied to the inverter circuit 3 via the filter 17 and the power supply relay switching element 5.

The sensors 8 or the like are connected to the input circuit 12. The information from the sensors 8 or the like is transmitted to the CPU 10 via the input circuit 12. The CPU 10 calculates and outputs a control amount corresponding to the magnitude of the current to be supplied to each of the three-phase windings Ua, Va, and Wa of the rotary electric machine 2 based on this information. An output signal of the CPU 10 is transmitted to the drive circuit 11. The drive circuit 11 drives the inverter circuit 3 based on the calculation result of the CPU 10. The control by the drive circuit 11 is performed for each of three phases (U phase, V phase, and W phase) of the rotary electric machine 2, and a current is supplied independently to each of three-phase windings Ua, Va, and Wa from the inverter circuit 3.

A detection result by the rotation sensor 9 is fed back to the input circuit 12. The CPU 10 calculates the rotation angle and the like of the rotating shaft 21 of the rotary electric machine 2 by using the rotation angle information obtained by the rotation sensor 9. In addition, although not shown, potential differences between both ends of the shunt resistors 33U, 33V, and 33W, voltages of the terminals of the three-phase windings Ua, Va, and Wa of the rotary electric machine 2, and the like are also fed back to the input circuit 12. The CPU 10 calculates a difference between the calculated value of the current and the detected value thereof based on this information to perform feedback control.

The power supply relay switching element 5 is provided between the battery 6 and the inverter circuit 3. The power supply relay switching element 5 switches between the supply and the cut-off of the current from the battery 6 to the inverter circuit 3 based on the drive signal from the drive circuit 11. The supply of the current to the rotary electric machine 2 can be cut off by the power supply relay switching element 5.

The CPU 10 has an abnormality detection function of detecting an abnormality of the sensors 8 or the like, the drive circuit 11, the inverter circuit 3, the three-phase windings Ua, Va, and Wa of the rotary electric machine 2, and the like.

In a case where an abnormality is detected, the CPU 10 turns off the upper arm switching elements 31U, 31V, and 31W, the lower arm switching elements 32U, 32V, and 32W, or the rotary electric machine relay switching elements 34U, 34V, and 34W of a phase in which the abnormality is detected in order to block the supply of the current to the phase.

Alternatively, the CPU 10 may turn off the power supply relay switching element 5 to block the supply of the current to all the phases.

The filter 17 limites noise generated by the inverter circuit 3. Specifically, switching noise is generated by pulse width modulation (PWM) control of the inverter circuit 3. The filter 17 is provided to limit the switching noise from being transmitted from the rotary electric device 100 to the outside. A power supply line and a ground (GND) line are connected to the filter 17 from the battery 6.

The filter 17 includes a normal mode coil 17a (coil) and capacitors 17b, 17c, and 17d. The normal mode coil 17a is a coil for normal mode noise. The capacitor 17b is an acrossthe-line capacitor or an X capacitor. The capacitors 17c and 17d are line bypass capacitors or Y capacitors. The filter 17 is an electromagnetic interface (EMI) filter that limites a conduction noise and a radiation noise generated by the inverter circuit 3. A middle point 17e between the capacitors 17c and 17d is a body ground, and is electrically connected to a vehicle body through a part of the rotary electric device 100 to be grounded. The filter 17 may include a common mode coil that is a coil for common mode noise, or the normal mode coil 17a may be omitted, depending on the noise generated in the rotary electric device 100, and the number of capacitors included in the filter 17 may be two or less or four or more.

Next, the structures of the units of the rotary electric device 100 will be described with reference to FIGS. 2 to 7.

In the present description, a direction along an axis O of the rotating shaft 21 of the rotary electric machine 2 is referred to as an axial direction Z. As shown in FIG. 2, the rotary electric machine 2 and the control unit 1 are disposed side by side in the axial direction Z and are integrated with each other. In the axial direction Z, a side on which the control unit 1 is disposed is referred to as an upper side, and a side on which the rotary electric machine 2 is disposed is referred to as a lower side. A case where a view is seen in the axial direction Z is referred to as a plan view. A view as seen from the axial direction Z is referred to as a plan view. The axial direction Z may not coincide with the vertical direction. One direction orthogonal to the axial direction Z is referred to as a first orthogonal direction X. A direction orthogonal to both the axial direction Z and the first orthogonal direction X is referred to as a second orthogonal direction Y. A side away from the axis O of the rotating shaft 21 in the first orthogonal direction X is referred to as an outer side in the first orthogonal direction X, and a side toward the axis O of the rotating shaft 21 is referred to as an inner side in the first orthogonal direction X. In the second orthogonal direction Y, a side away from the axis O of the rotating shaft 21 is referred to as an outer side in the second orthogonal direction Y, and a side toward the axis O of the rotating shaft 21 is referred to as an inner side in the second orthogonal direction Y.

The rotary electric machine 2 has a rotor and a stator (not shown). The rotor and the stator are accommodated in a rotary electric machine case 25. The rotor is fixed to the rotating shaft 21. A plurality of permanent magnets are disposed on an outer peripheral surface of the rotor. The plurality of permanent magnets are disposed, for example, such that polarities (S-pole and N-pole) on the outer peripheral surface of the rotor alternate in the circumferential direction. The stator is disposed on the outer peripheral side of the rotor with a gap therebetween. The three-phase windings Ua, Va, and Wa are wound around the stator. The three-phase windings Ua, Va, and Wa are distributedly wound or concentrically wound on the stator. End portions (not shown) of the three-phase windings Ua, Va, and Wa extend toward the control unit 1.

Next, the structure of the control unit 1 will be described. The control unit 1 includes a control board 14, a power module 35, and a bus bar unit 36.

The control unit 1 is covered with a housing 40. The housing 40 covers an upper portion and an outer periphery of the control unit 1. Since the components constituting the control unit 1 are accommodated in the housing 40, it is possible to prevent the components from being damaged. A power supply connector 42 and a signal connector 43 are disposed in an upper portion of the housing 40.

The power supply connector 42 includes a first holding member 421 and a power supply connection terminal 422 (external connection terminal) that extends downward from the first holding member 421. The signal connector 43 includes a second holding member 431 and a signal connection terminal 432 that extends downward from the second holding member 431. The first holding member 421, the second holding member 431, and the housing 40 are integrally molded of a resin material. The power supply connection terminal 422 and the signal connection terminal 432 are accommodated in the housing 40. The power supply connection terminal 422 and the signal connection terminal 432 are inserted into through-holes (not shown) formed in the control board 14 and are electrically connected to circuit patterns formed on the control board 14. A relatively large current of a power supply system flows through the power supply connector 42, and a relatively small current of a signal system flows through the signal connector 43.

An electromagnetic shield 37 having a cylindrical shape with top is provided inside the housing 40. The electromagnetic shield 37 covers the control board 14, the power module 35, and the bus bar unit 36. The electromagnetic shield 37 is made of metal. The electromagnetic shield 37 limites the noise generated in the control unit 1 from being released to the outside.

The electromagnetic shield 37 has a stepped shape. Specifically, the electromagnetic shield 37 includes a first top portion 37a, a second top portion 37b that is located below the first top portion 37a, and a connection portion 37c that connects the first top portion 37a and the second top portion 37b.

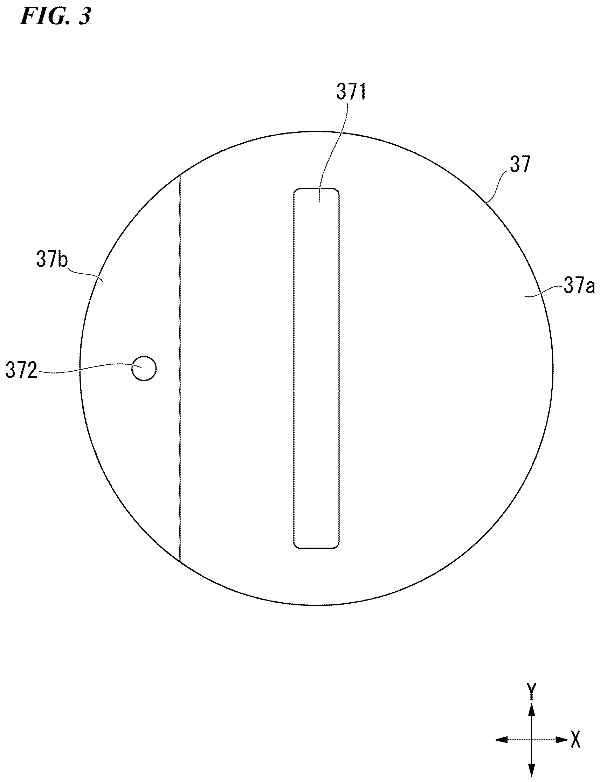

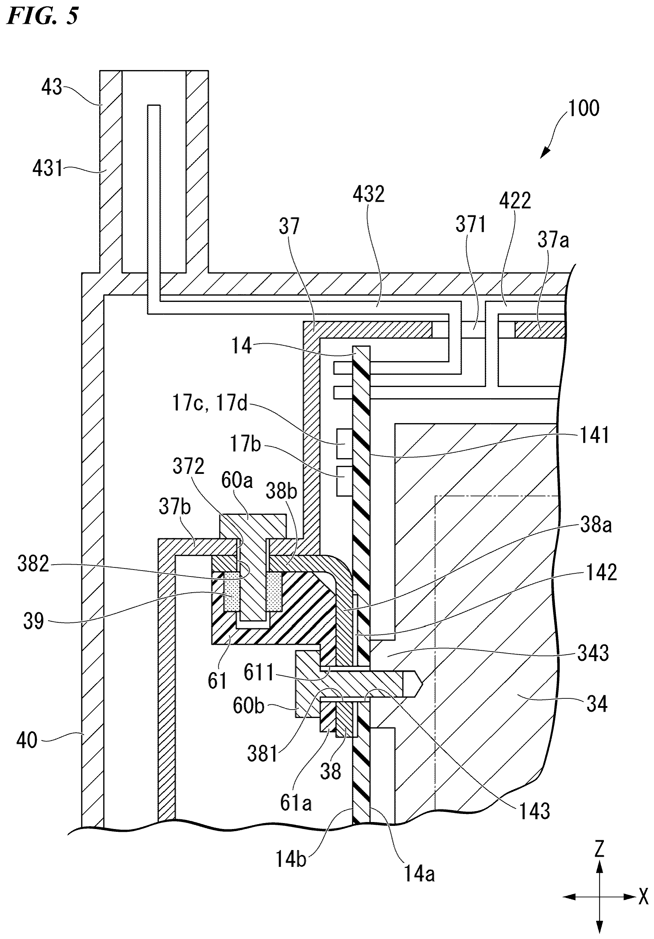

FIG. 3 is a top view of the electromagnetic shield 37. As shown in FIG. 3, a through-hole 371 is provided in the first top portion 37a. The power supply connection terminal 422 of the power supply connector 42 and the signal connection terminal 432 of the signal connector 43 are inserted into the through-hole 371. A through-hole 372 into which a second screw 60a (see FIG. 5) is inserted is provided in the second top portion 37b. The electromagnetic shield 37 may be formed with a through-hole or the like for positioning during assembly.

Returning to FIG. 2, a heat sink 34 is disposed inside the housing 40. The heat sink 34 includes a columnar base portion 342 and a column portion 341 that protrudes upward from a central portion of the base portion 342.

The column portion 341 is disposed inside the electromagnetic shield 37. The column portion 341 extends in the axial direction Z. An end portion of the column portion 341 in the axial direction Z is fixed to the base portion 342. That is, the column portion 341 is cantilevered and supported by the base portion 342.

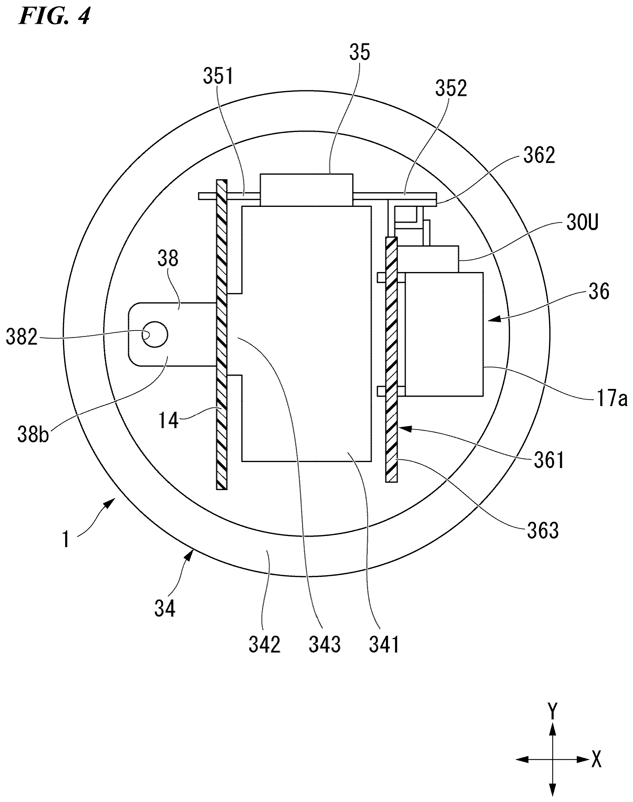

FIG. 4 is a plan view of the rotary electric device 100 and is a view showing a state in which the housing 40 and the electromagnetic shield 37 are removed. As shown in FIG. 4, in a plan view, the column portion 341 has a long rectangular shape in the second orthogonal direction Y. The power module 35 is disposed on a side surface of the column portion 341 in the second orthogonal direction Y. The control board 14 is disposed on one side surface of the column portion 341 in the first orthogonal direction X. A screw fastening base 343 for fixing the control board 14 to the heat sink 34 is provided on one side surface of the column portion 341 in the first orthogonal direction X. The bus bar unit 36 is disposed on the other side surface of the column portion 341 in the first orthogonal direction X.

The base portion 342 includes a large diameter portion 342a and a small diameter portion 342b that is disposed above the large diameter portion 342a and has a diameter less than the diameter of the large diameter portion 342a. The rotary electric machine case 25 and the housing 40 are fixed to the outer peripheral surface of the large diameter portion 342a. The base portion 342 is supported by the rotary electric machine case 25. The electromagnetic shield 37 is fixed to the outer peripheral surface of the small diameter portion 342b. Insertion holes (not shown) into which end portions of the three-phase windings Ua, Va, and Wa are inserted are formed in the base portion 342. Although not shown, end portions of the three-phase windings Ua, Va, and Wa extend upward through the insertion holes and are connected to the bus bar unit 36.

The power module 35 is vertically disposed along a side surface of the column portion 341 in the second orthogonal direction Y. In FIG. 2, the power module 35 is provided on a back side of the column portion 341 and is indicated by a two-dot chain line. The power module 35 includes the upper arm switching elements 31U, 31V, and 31W, the lower arm switching elements 32U, 32V, and 32W, the shunt resistors 33U, 33V, and 33W, and the rotary electric machine relay switching elements 34U, 34V, and 34W of the inverter circuit 3. As shown in FIG. 4, a first terminal 351 connected to the control board 14 is provided at one end portion of the power module 35 in the first orthogonal direction X, and a second terminal 352 connected to the bus bar unit 36 is provided at the other end portion thereof. For example, the control board 14 and the first terminal 351 are connected by soldering, and the bus bar unit 36 and the second terminal 352 are connected by tungsten insert gas (TIG) welding.

The bus bar unit 36 includes a bus bar base portion 361. The bus bar base portion 361 includes a bus bar 362 and a bus bar holder 363 made of a resin in which the bus bar 362 is embedded. The smoothing capacitors 30U, 30V, and 30W of the inverter circuit 3 and the normal mode coil 17a of the filter 17 are mounted on the bus bar base portion 361. The bus bar 362 is connected to the end portions of the three-phase windings Ua, Va, and Wa of the rotary electric machine 2, the second terminal 352 of the power module 35, the terminals of the smoothing capacitors 30U, 30V, and 30W, the terminals of the normal mode coil 17a, and the power supply connection terminal 422 (power supply terminal and GND terminal) of the power supply connector 42.

The control board 14 is vertically disposed along one side surface of the column portion 341 in the first orthogonal direction X. That is, the control board 14 is disposed to extend in the axial direction Z and the second orthogonal direction Y. The control board 14 has a first surface 14a facing the inside in the first orthogonal direction X and a second surface 14b facing the outside in the first orthogonal direction X. The control circuit unit 4, the power supply relay switching element 5, and the capacitors 17b, 17c, and 17d of the filter 17 are mounted on the control board 14. In FIG. 2, the control circuit unit 4 and the power supply relay switching element 5 are omitted. In addition, circuit components (not shown) used for controlling the inverter circuit 3 are mounted on the control board 14.

Since the current flowing through the drive circuit 11 is relatively small, the drive circuit 11 is mounted on the control board 14. However, the drive circuit 11 may be disposed in the power module 35. In addition, since the current flowing through the power supply relay switching element 5 is relatively large, the power supply relay switching element 5 may be disposed in the power module 35 instead of the control board 14.

FIG. 5 is a partial cross-sectional view showing the periphery of an upper portion 141 of the control board 14 of the rotary electric device 100. As shown in FIG. 5, the capacitors 17b, 17c, and 17d are disposed on the upper portion 141 of the control board 14. The capacitors 17b, 17c, and 17d are disposed between the first top portion 37a and the second top portion 37b in the axial direction Z. In the present embodiment, the entire capacitors 17b, 17c, and 17d are disposed above the second top portion 37b (on the first top portion 37a side). In addition, the power supply connection terminal 422 and the signal connection terminal 432 are connected to the upper portion 141. The filter 17 prevents the noise generated in the inverter circuit 3 from leaking to the outside through the power supply connection terminal 422. In the example of FIG. 5, the capacitors 17b, 17c, and 17d are disposed on the second surface 14b of the control board 14. The capacitors 17b, 17c, and 17d may be disposed on the first surface 14a of the control board 14.

A through-hole 143 through which the first screw 60b is inserted is formed in the control board 14. A GND pattern 142 is formed on an outer peripheral portion of the through-hole 143 in the second surface 14b of the control board 14. The GND pattern 142 configures a part of a wiring pattern that is electrically connected to the capacitors 17b, 17c, and 17d and the power supply connection terminal 422. The GND pattern 142 constitutes the filter 17 together with the capacitors 17b, 17c, and 17d. Since the filter 17 is configured by the GND pattern 142, it is possible to improve the reliability of the connection to the power supply connection terminal 422 while limiting the cost.

A ground bus bar 38 is provided between the control board 14 and the electromagnetic shield 37. The ground bus bar 38 electrically connects the GND pattern 142 and the electromagnetic shield 37. The ground bus bar 38 is formed in an L-shape having a first plate portion 38a and a second plate portion 38b.

The second plate portion 38b is in contact with a lower surface of the second top portion 37b. A through-hole 382 into which the second screw 60a is inserted is formed in the second plate portion 38b. A fastening target portion 39 to which the second screw 60a is fastened is provided on the lower surface of the second plate portion 38b. The fastening target portion 39 is provided so as to sandwich the second plate portion 38b between the fastening target portion 39 and the second top portion 37b. The fastening target portion 39 is, for example, a hexagonal nut. A resin holder 61 (resin member) is provided on the lower surface of the second plate portion 38b. The second plate portion 38b is supported from below by the resin holder 61. The resin holder 61 is assembled to the ground bus bar 38 by press-fitting or the like. The resin holder 61 holds the fastening target portion 39 in a nonrotatable manner.

In a direction along the axis of the second screw 60a, the second top portion 37b, the second plate portion 38b, and the fastening target portion 39 are disposed in this order from above. In this state, the second screw 60a is inserted into the through-hole 372 and the through-hole 382 from above and is fastened to the fastening target portion 39. As a result, the second plate portion 38b and the second top portion 37b are fixed to each other in a closely attached state, and the second plate portion 38b and the second top portion 37b are electrically connected to each other. In addition, at this time, the axis of the second screw 60a is disposed perpendicular to the second top portion 37b.

With such a configuration, the electromagnetic shield 37 and the ground bus bar 38 can be fixed to each other without providing the fixing component above the second screw 60a. Therefore, it is not necessary to secure the distance in the axial direction Z for fixing the ground bus bar 38 between the electromagnetic shield 37 and the housing 40, and it is possible to limit an increase in the size of the control unit 1 in the axial direction Z.

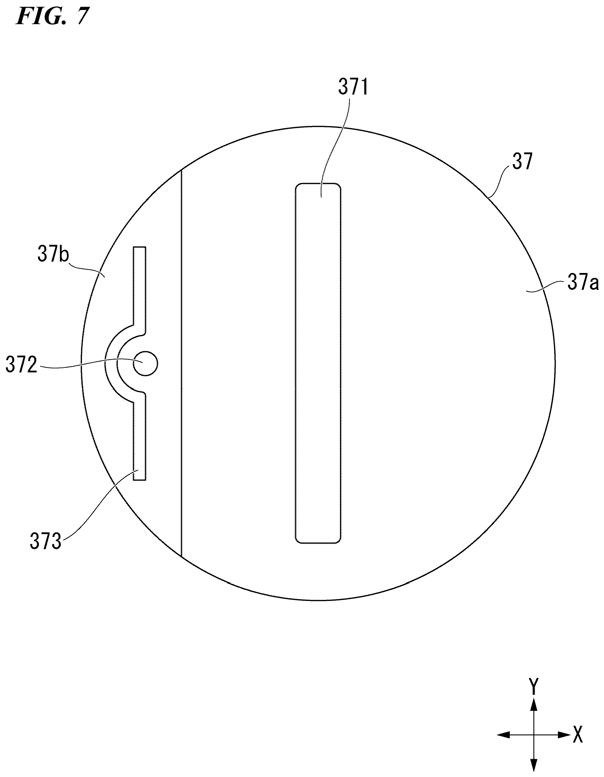

As shown in FIG. 7, a notch hole 373 provided to surround the through-hole 372 may be provided at the second top portion 37b. Since the notch hole 373 is provided, the second top portion 37b is likely to be deformed, and the second plate portion 38b and the second top portion 37b can be more reliably fixed.

The first plate portion 38a is in contact with the second surface 14b of the control board 14. The first plate portion 38a is in contact with the GND pattern 142 of the control board 14. A through-hole 381 into which the first screw 60b is inserted is formed in the first plate portion 38a. The resin holder 61 is provided with a protruding portion 61a that protrudes downward. The second plate portion 38b is covered from the outside in the first orthogonal direction X by the protruding portion 61a. A through-hole 611 into which the first screw 60b is inserted is formed in the protruding portion 61a. An outer peripheral portion of the through-hole 143 on the first surface 14a of the control board 14 is supported by the screw fastening base 343 of the heat sink 34.

In a direction along the axis of the first screw 60b, the protruding portion 61a, the first plate portion 38a, the control board 14, and the screw fastening base 343 are disposed in this order toward the inside of the first orthogonal direction X. In this state, the first screw 60b is inserted into the through-hole 611, the through-hole 381, and the through-hole 143 from the outside in the first orthogonal direction X and is fastened to the screw fastening base 343. Accordingly, the first plate portion 38a and the control board 14 are fixed to the screw fastening base 343 in a state where the first plate portion 38a and the control board 14 are in close contact with each other, and the first plate portion 38a and the GND pattern 142 are electrically connected to each other. In addition, at this time, an axis of the first screw 60b is disposed perpendicular to the control board 14.

Since the first plate portion 38a is disposed outside the control board 14 in the first orthogonal direction X and the first screw 60b is fastened from the outside in the first orthogonal direction X, for example, the ground bus bar 38 and the control board 14 can be fixed to the heat sink 34 without providing a fixing component above the heat sink 34. Therefore, it is possible to limit an increase in the size of the control unit 1 in the axial direction Z.

With the above-described configuration, the GND pattern 142 and the electromagnetic shield 37 are electrically connected to each other through the ground bus bar 38. In addition, since the first screw 60b is fastened to the screw fastening base 343, the first screw 60b is electrically connected to the heat sink 34. However, the electromagnetic shield 37 and the GND pattern 142 are not electrically connected to the first screw 60b and the heat sink 34. That is, the protruding portion 61a of the resin holder 61 as an insulating material is sandwiched between the head portion of the first screw 60b and the first plate portion 38a. In addition, a shaft portion of the first screw 60b is not in contact with the inner surface of the through-hole 381 of the first plate portion 38a and the inner surface of the through-hole 143 of the control board 14. For example, a color made of a resin as an insulating material may be disposed on the inner surface of the through-hole 381 of the first plate portion 38a and the inner surface of the through-hole 143 of the control board 14. Accordingly, the first screw 60b is electrically insulated from the ground bus bar 38 and the control board 14. Further, the first surface 14a of the control board 14 and the screw fastening base 343 are electrically insulated from each other. Therefore, the capacitors 17b, 17c, and 17d of the filter 17 are grounded through the ground bus bar 38 and the electromagnetic shield 37 without passing through the heat sink 34 to which the power module 35, which is a noise source, is attached. As a result, the filter 17 can effectively limit the noise generated in the power module 35 (inverter circuit 3).

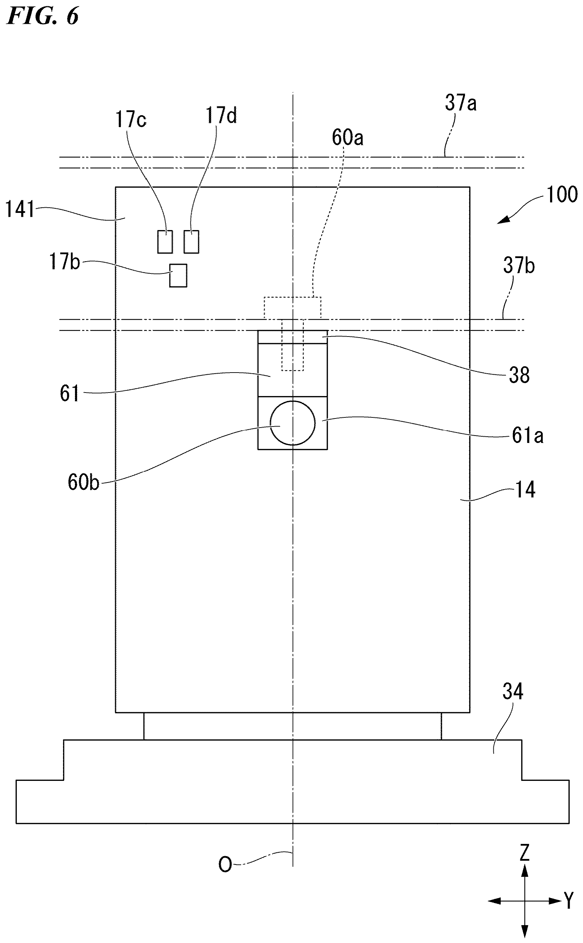

FIG. 6 is a view of the control board 14 as viewed in the first orthogonal direction X. In FIG. 6, the first top portion 37a and the second top portion 37b of the electromagnetic shield 37 are shown by a two-dot chain line. In addition, the second screw 60a is shown by a dotted line.

As shown in FIG. 6, the ground bus bar 38 is disposed at a position overlapping with the center of the control board 14 in the second orthogonal direction Y when viewed in the first orthogonal direction X. In addition, the screws 60a and 60b are also disposed at positions overlapping with the center of the control board 14 in the second orthogonal direction Y when viewed in the first orthogonal direction X. The screws 60a and 60b are disposed such that the axis of the second screw 60a, the axis of the first screw 60b, and the axis O of the rotating shaft 21 are positioned on the same plane. As a result, the control board 14 can be fixed to the electromagnetic shield 37 at the center in the second orthogonal direction Y by using the screws 60a and 60b, and the vibration resistance and the durability of the control board 14 can be improved.

As described above, the rotary electric device 100 according to the present embodiment includes the rotary electric machine 2 having the rotating shaft 21, the control unit 1 that is disposed side by side with the rotary electric machine 2 in the axial direction Z and controls the rotary electric machine 2, and the electromagnetic shield 37 that covers the control unit 1. The control unit 1 includes the control board 14 that extends in the axial direction Z and to which the power supply connection terminal 422 of the power supply connector 42 is connected, and the filter 17 that attenuates a noise component propagating to the power supply connection terminal 422. The electromagnetic shield 37 is formed in a tubular shape having the first top portion 37a that covers the entire control board 14 and has a through-hole 371 into which the power supply connection terminal 422 is inserted and the second top portion 37b that is disposed closer to the rotary electric machine 2 than the first top portion 37a. The capacitors 17b, 17c, and 17d of the filter 17 are mounted on the control board 14 and are disposed between the first top portion 37a and the second top portion 37b in the axial direction Z.

Since the capacitors 17b, 17c, and 17d are mounted on the control board 14, the increase in size of the rotary electric device 100 can be limited and the cost of the rotary electric device 100 can be reduced, as compared with a case where a dedicated board and a support structure for mounting the capacitors 17b, 17c, and 17d are provided. In addition, since the capacitors 17b, 17c, and 17d are disposed between the first top portion 37a and the second top portion 37b in the axial direction Z, the capacitors 17b, 17c, and 17d can be disposed close to the power supply connection terminal 422, and the filter 17 can effectively attenuate the noise component propagated to the power supply connection terminal 422. The entire control board 14 is covered with the electromagnetic shield 37, and the through-hole 371 into which a power supply connection terminal 422 is inserted is formed in a first top portion 37a of the electromagnetic shield 37. Accordingly, for example, the size of the through-hole 371 can be reduced as compared with a case where a part of the control board 14 penetrates the electromagnetic shield 37 and protrudes to the outside of the electromagnetic shield 37, and the noise generated in the control unit 1 can be limited from leaking to the outside through the through-hole 371. Therefore, it is possible to limit the noise generated in the control unit 1 from propagating to the outside of the rotary electric device 100.

The electromagnetic shield 37 has a stepped shape having the first top portion 37a and the second top portion 37b. By forming the through-hole 371 in the first top portion 37a and using the second top portion 37b for fixing to, for example, the control board 14, the size of the through-hole 371 of the first top portion 37a can be further reduced.

In addition, the filter 17 is formed on the control board 14 and has a GND pattern 142 that is electrically connected to the power supply connection terminal 422. The control unit 1 has the ground bus bar 38 that electrically connects the GND pattern 142 and the electromagnetic shield 37.

As a result, the filter 17 can be grounded via the ground bus bar 38 and the electromagnetic shield 37.

In addition, the rotary electric device 100 further includes the heat sink 34 disposed inside the electromagnetic shield 37. The control unit 1 includes the first screw 60b that fixes the ground bus bar 38 and the control board 14 to the heat sink 34, and the resin holder 61 that is disposed between the ground bus bar 38 and the first screw 60b.

The ground bus bar 38 and the control board 14 can be fixed to the heat sink 34 by the first screw 60b. In addition, the resin holder 61 is disposed between the ground bus bar 38 and the first screw 60b, and the ground bus bar 38 and the first screw 60b are insulated from each other. Therefore, the filter 17 can be grounded via the ground bus bar 38 and the electromagnetic shield 37 without passing through the heat sink 34 to which the power module 35, which is a noise source, is attached. As a result, the filter 17 can more effectively attenuate the noise component propagated to the power supply connection terminal 422.

In addition, in a direction along the axis of the first screw 60b, the resin holder 61, the ground bus bar 38, the control board 14, and the heat sink 34 are disposed in this order toward the axis O of the rotating shaft 21.

As a result, the ground bus bar 38 and the control board 14 can be easily fixed to the heat sink 34 by using the first screw 60b.

In addition, the control unit 1 includes a second screw 60a that fixes the ground bus bar 38 to the second top portion 37b.

The ground bus bar 38 can be fixed to the second top portion 37b by the second screw 60a.

In addition, the control unit 1 is provided so that the ground bus bar 38 is sandwiched between the control unit 1 and the second top portion 37b, and has the fastening target portion 39 to which the second screw 60a is fastened.

As a result, the ground bus bar 38 can be more reliably fixed to the second top portion 37b.

In addition, the ground bus bar 38 and the second top portion 37b are disposed side by side in the axial direction Z.

As a result, the second screw 60a can be fastened from above in the axial direction Z, and the ground bus bar 38 can be more easily fixed to the second top portion 37b.

In addition, the control unit 1 has the ground bus bar 38, the first screw 60b that attaches the ground bus bar 38 to the control board 14, and the second screw 60a that attaches the ground bus bar 38 to the second top portion 37b. The axis of the first screw 60b and the axis of the second screw 60a are disposed on the same plane including the axis O of the rotating shaft 21.

As a result, the control board 14 can be reliably fixed to the electromagnetic shield 37 by using the screws 60a and 60b, and the vibration resistance and the durability of the control board 14 can be improved.

In addition, the axis of the first screw 60b is disposed perpendicular to the control board 14, and the axis of the second screw 60a is disposed perpendicular to the second top portion 37b.

As a result, the ground bus bar 38 and the control board 14 can be reliably fixed without loosening by using the first screw 60b, and the ground bus bar 38 and the electromagnetic shield 37 can be reliably fixed without loosening by using the second screw 60a. Therefore, the vibration resistance and the durability of the control board 14 can be improved.

In addition, the rotary electric device 100 further includes the housing 40 that accommodates the power supply connection terminal 422 and covers the electromagnetic shield 37.

Since the components constituting the control unit 1 are accommodated in the housing 40, it is possible to prevent the components from being damaged. In addition, since the control board 14 and the electromagnetic shield 37 are disposed inside the housing 40, an increase in the size of the rotary electric device 100 can be limited.

### Second Embodiment.

Next, a rotary electric device according to a second embodiment will be described. Since the basic configuration of the rotary electric device according to the present embodiment is the same as that of the rotary electric device according to the first embodiment, the different points will be mainly described.

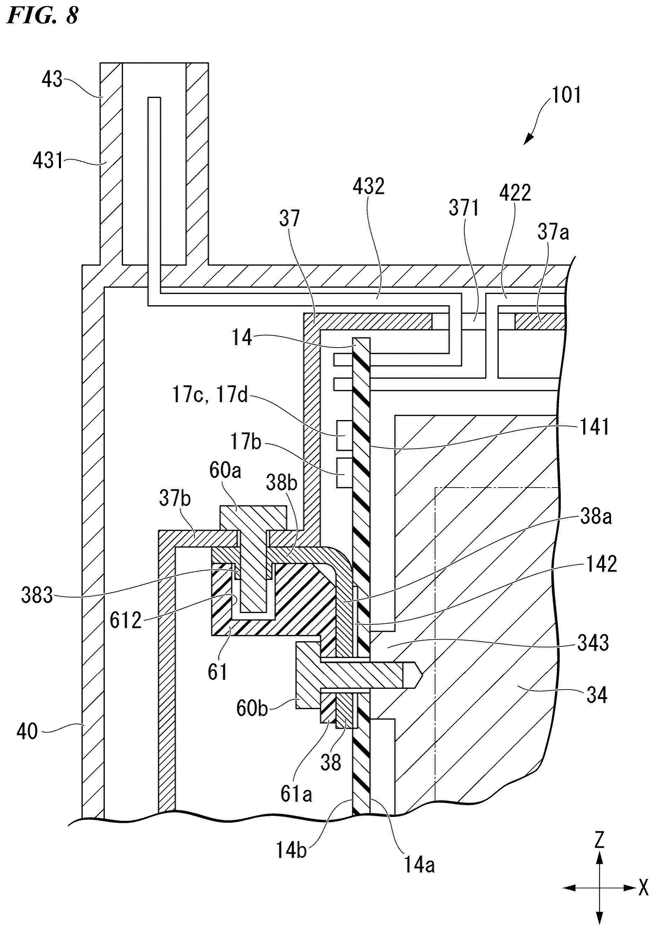

FIG. 8 is a partial cross-sectional view of a rotary electric device 101 according to the second embodiment. As shown in FIG. 8, in the present embodiment, the fastening target portion 39 is not provided, and the second screw 60a is screwed with a female screw portion 383 formed in the ground bus bar 38. The female screw portion 383 is formed by subjecting the ground bus bar 38 to a burring process and a threading process. The electromagnetic shield 37 and the ground bus bar 38 are connected to each other by screwing the second screw 60a into the female screw portion 383. In addition, a recess portion 612 in which the tip portion of the shaft portion of the second screw 60a is accommodated is formed in the resin holder 61.

In this case, the electromagnetic shield 37 and the ground bus bar 38 can be electrically connected to each other without providing the fastening target portion 39. Therefore, the cost of the rotary electric device 101 can be reduced.

### Third Embodiment.

Next, a rotary electric device according to a third embodiment will be described. Since the basic configuration of the rotary electric device according to the present embodiment is the same as that of the rotary electric device according to the first embodiment, the different points will be mainly described.

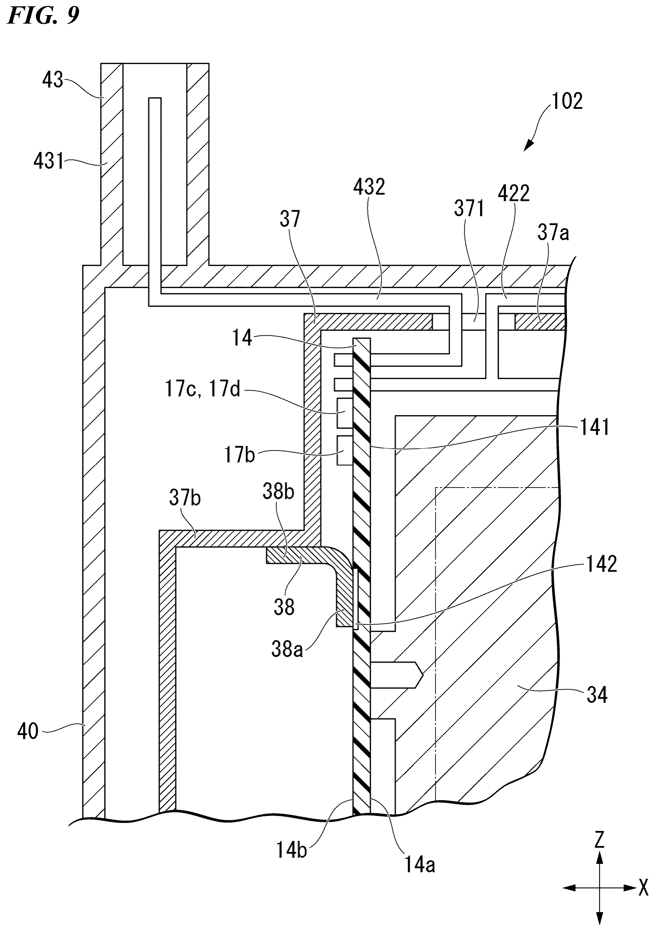

FIG. 9 is a partial cross-sectional view of a rotary electric device 102 according to the third embodiment. As shown in FIG. 9, in the present embodiment, the screws 60a and 60b are not used to fix the ground bus bar 38, and the through-holes 381 and 382 are not formed in the ground bus bar 38. The through-hole 143 is not formed in the control board 14. The first plate portion 38a is joined to the GND pattern 142 of the control board 14 by soldering. For example, the first plate portion 38a is surface-mounted on the GND pattern 142 with reflow solder. The second plate portion 38b is in pressing contact with the second top portion 37b. For example, in a case of assembly, the lower surface of the second top portion 37b may be brought into contact with the second plate portion 38b in a state where the ground bus bar 38 is bent by the second top portion 37b. In addition, the ground bus bar 38 may be formed of an elastic member such as a leaf spring. In this case, the second plate portion 38b can be made to abut more strongly on the second top portion 37b by the elastic force of the ground bus bar 38.

As described above, in the rotary electric device 102 according to the present embodiment, the ground bus bar 38 is joined to the GND pattern 142 by soldering and is in pressing contact with the second top portion 37b. In this case, the GND pattern 142 and the electromagnetic shield 37 can be electrically connected to each other through the ground bus bar 38 without providing a screw or the like. Therefore, the cost of the rotary electric device 102 can be reduced.

In addition, the ground bus bar 38 is elastically deformed to be in pressing contact with the second top portion 37b. As a result, the electromagnetic shield 37 and the ground bus bar 38 can be more reliably electrically connected to each other.

### Fourth Embodiment.

Next, a rotary electric device according to a fourth embodiment will be described. Since the basic configuration of the rotary electric device according to the present embodiment is the same as that of the rotary electric device according to the first embodiment, the different points will be mainly described.

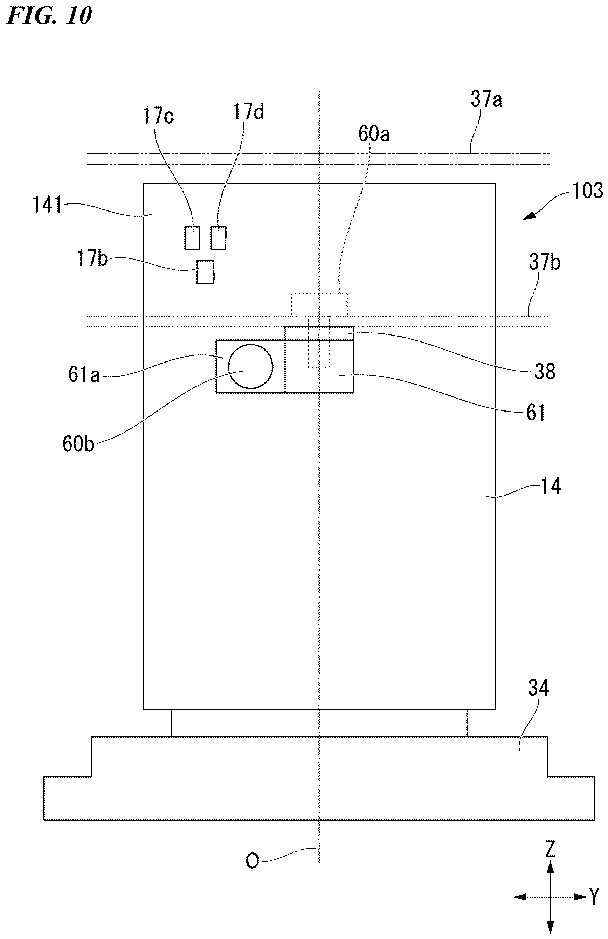

FIG. 10 is a view of the control board 14 of a rotary electric device 103 according to the fourth embodiment as viewed from the first orthogonal direction X. In FIG. 10, the first top portion 37a and the second top portion 37b of the electromagnetic shield 37 are shown by a two-dot chain line. In addition, the second screw 60a is shown by a dotted line.

As shown in FIG. 10, in the present embodiment, the second screw 60a is disposed at a position overlapping the center of the control board 14 in the second orthogonal direction Y when viewed in the first orthogonal direction X, and the first screw 60b is disposed at a position away from the center of the control board 14 in the second orthogonal direction Y. The axis of the second screw 60a is disposed on the first plane including the axis O of the rotating shaft 21, and the axis of the first screw 60b is disposed on the second plane parallel to the first plane. Even in this case, the ground bus bar 38 can be fixed to the control board 14 and the electromagnetic shield 37 by using the screws 60a and 60b, and the GND pattern 142 and the electromagnetic shield 37 can be electrically connected to each other via the ground bus bar 38. In addition, the degree of freedom of design is improved by adjusting the positions of the screws 60a and 60b. Therefore, it is possible to limit an increase in the size of the rotary electric device 103 and to reduce the cost of the rotary electric device 103.

In a case where the first orthogonal direction X is viewed, the first screw 60b may be disposed at a position overlapping the center of the control board 14 in the second orthogonal direction Y, and the second screw 60a may be disposed at a position away from the center of the control board 14 in the second orthogonal direction Y.

### Fifth Embodiment.

Next, the rotary electric device according to a fifth embodiment will be described. Since the basic configuration of the rotary electric device according to the present embodiment is the same as that of the rotary electric device according to the first embodiment, the different points will be mainly described.

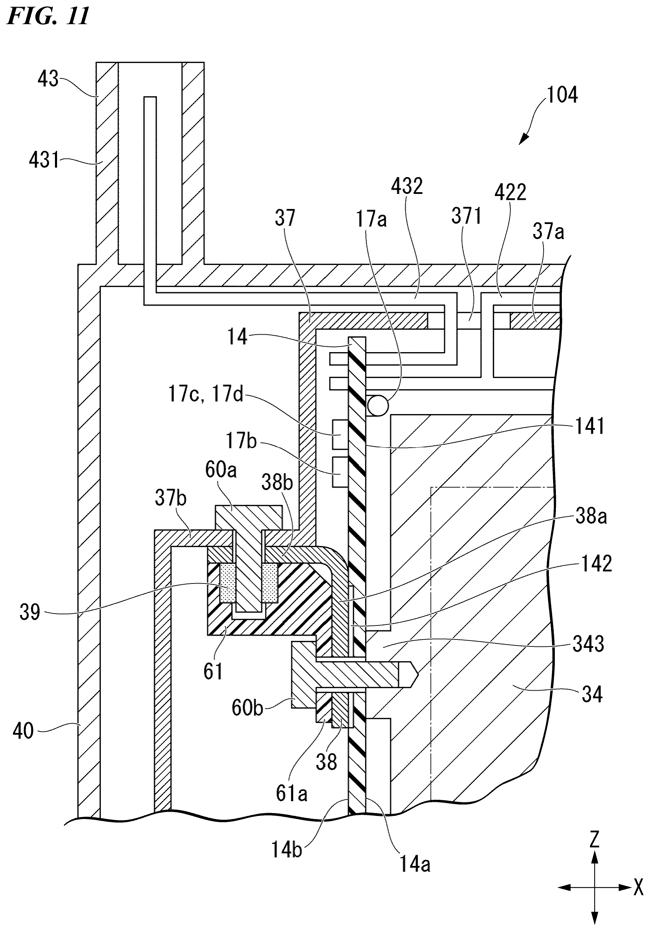

FIG. 11 is a partial cross-sectional view of a rotary electric device 104 according to the fifth embodiment.

As shown in FIG. 11, in the present embodiment, the normal mode coil 17a is provided on an upper portion 141 of the control board 14. That is, the capacitors 17b, 17c, and 17d and the normal mode coil 17a are mounted on the control board 14 and are disposed between the first top portion 37a and the second top portion 37b in the axial direction Z. As a result, the noise can be more effectively reduced by the filter 17 after the noise is absorbed by the electromagnetic shield 37.

### Sixth Embodiment.

Next, a rotary electric device according to a sixth embodiment will be described. Since the basic configuration of the rotary electric device according to the present embodiment is the same as that of the rotary electric device according to the first embodiment, the different points will be mainly described.

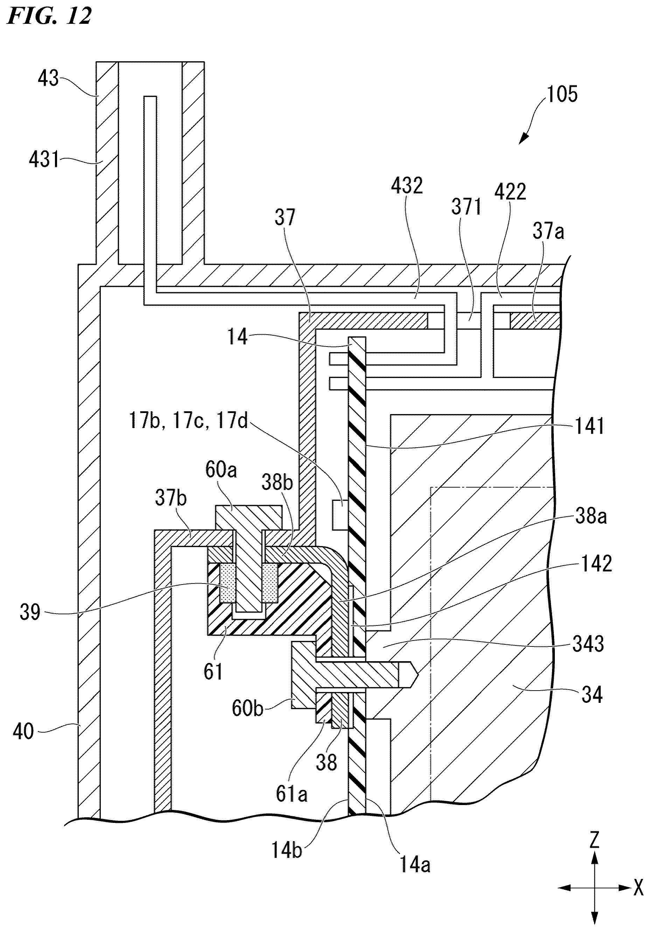

FIG. 12 is a partial cross-sectional view of a rotary electric device 105 according to the sixth embodiment.

As shown in FIG. 12, in the present embodiment, the capacitors 17b, 17c, and 17d are provided such that the positions of the side surfaces of the capacitors 17b, 17c, and 17d coincide with the positions of the upper surface (outer surface) of the second top portion 37b in the axial direction Z. As a result, the noise can be absorbed by the electromagnetic shield 37 and then immediately reduced by the filter 17.

### Seventh Embodiment.

Next, a rotary electric device according to a seventh embodiment will be described. Since the basic configuration of the rotary electric device according to the present embodiment is the same as that of the rotary electric device according to the first embodiment, the different points will be mainly described.

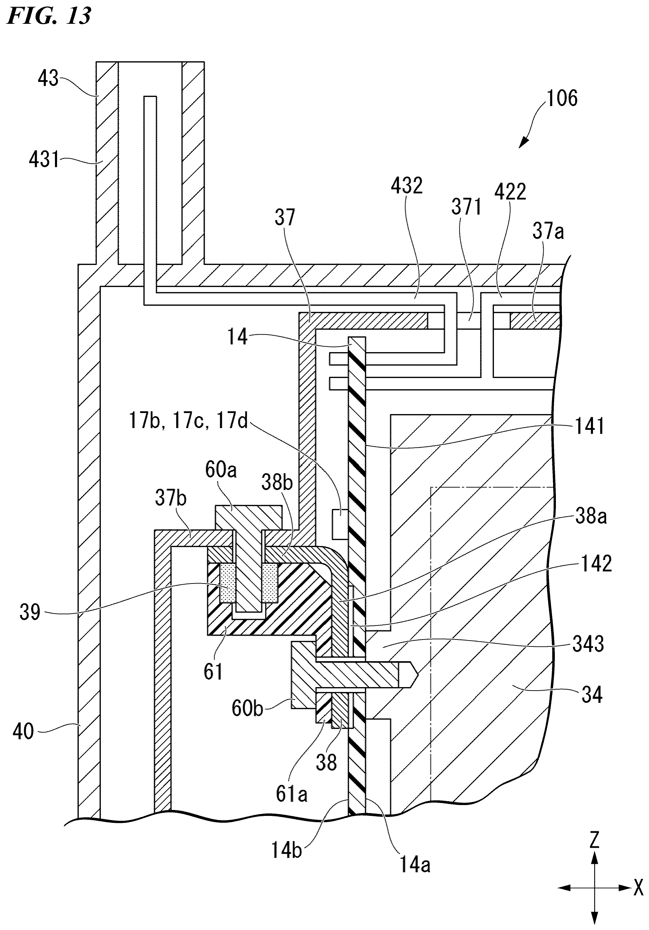

FIG. 13 is a partial cross-sectional view of a rotary electric device 106 according to the seventh embodiment.

As shown in FIG. 13, in the present embodiment, the capacitors 17b, 17c, and 17d are provided so as to overlap the upper surface (outer surface) of the second top portion 37b in the axial direction Z. That is, a part of the capacitors 17b, 17c, and 17d is disposed below the upper surface of the second top portion 37b. In this case as well, the noise can be absorbed by the electromagnetic shield 37 and then immediately reduced by the filter 17.

### Eighth Embodiment.

Next, a rotary electric device according to an eighth embodiment will be described. Since the basic configuration of the rotary electric device according to the present embodiment is the same as that of the rotary electric device according to the first embodiment, the different points will be mainly described.

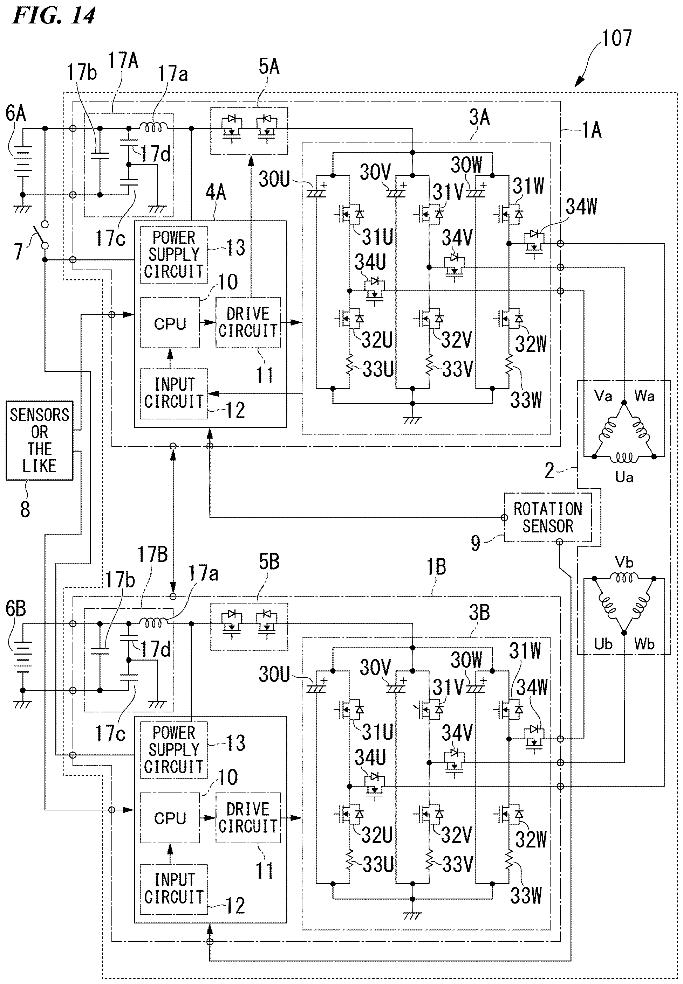

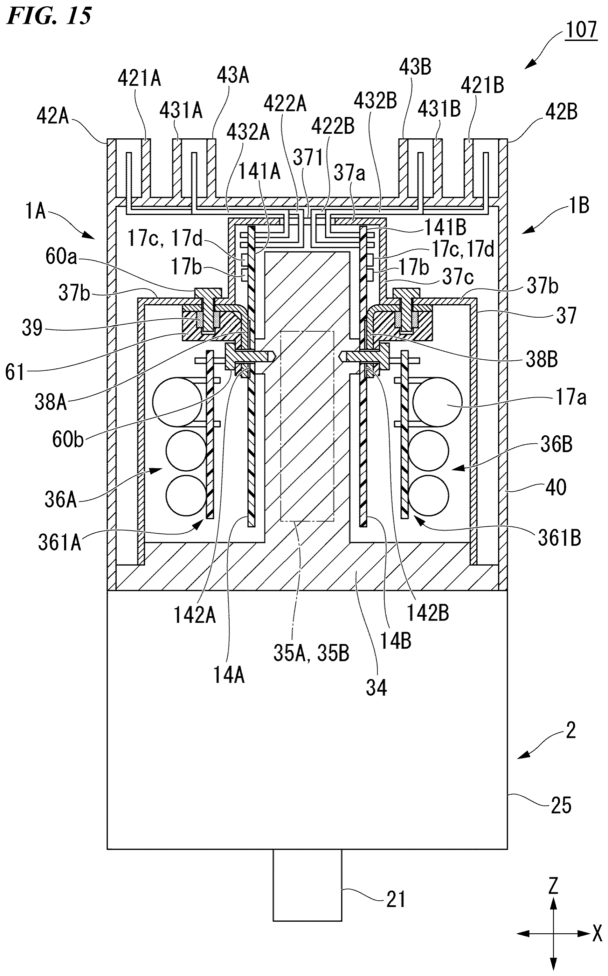

FIG. 14 is a circuit diagram of a rotary electric device 107 according to the eighth embodiment. FIG. 15 is a cross-sectional view of the rotary electric device 107.

As shown in FIGS. 14 and 15, in the present embodiment, the rotary electric machine 2 has two sets of three-phase windings. Specifically, the rotary electric machine 2 has second three-phase windings Ub, Vb, and Wb in addition to the three-phase windings Ua, Va, and Wa. In addition, the rotary electric device 100 has two sets of control units 1A and 1B. The control units 1A and 1B each have the same configuration as the control unit 1 described in the first embodiment. Therefore, in the present embodiment, among the components of the first control unit 1A, the same reference numerals as the corresponding components in the first embodiment are denoted by a suffix "A". In addition, among the components of the second control unit 1B, the same reference numerals as those of the corresponding components in the first embodiment are denoted by a suffix "B".

In the following, the description of the same structures as those in the first embodiment will be omitted, and the different points will be mainly described. For example, the control unit 1A includes an inverter circuit 3A, a control circuit unit 4A, a power supply relay switching element 5A, and a filter 17A. The configurations of the inverter circuit 3A, the control circuit unit 4A, the power supply relay switching element 5A, and the filter 17A are the same as the configurations of the inverter circuit 3, the control circuit unit 4, the power supply relay switching element 5, and the filter 17 described in the first embodiment. In addition, the control unit 1B includes an inverter circuit 3B, a control circuit unit 4B, a power supply relay switching element 5B, and a filter 17B.

The first control unit 1A operates the control circuit unit 4A and the inverter circuit 3A based on the input information from the sensors 8 or the like, the rotation sensor 9, and the like. As a result, the rotating shaft 21 can be driven via the three-phase windings Ua, Va, and Wa. The second control unit 1B operates the control circuit unit 4B and the inverter circuit 3B based on the input information from the sensors 8 or the like, the rotation sensor 9, and the like. As a result, the rotating shaft 21 can be driven through the three-phase windings Ub, Vb, and Wb. In this way, the two control units 1A and 1B are configured to be capable of driving the rotary electric machine 2 independently of each other, so that the redundancy of the system is ensured.

Next, the structure of each unit of the rotary electric device 107 will be described. As shown in FIG. 15, the control unit 1A includes a control board 14A, a power module 35A, and a bus bar unit 36A. The control unit 1B includes a control board 14B, a power module 35B, and a bus bar unit 36B.

The control units 1A and 1B are covered with the housing 40. A power supply connector 42A and a signal connector 43A connected to the control unit 1A, and a power supply connector 42B and a signal connector 43B connected to the control unit 1B are disposed above the housing 40. The power supply connector 42A has a first holding member 421A and a power supply connection terminal 422A (external connection terminal) that extends downward from the first holding member 421A. The signal connector 43A includes a second holding member 431A and a signal connection terminal 432A that extends downward from the second holding member 431A. The power supply connector 42B has a third holding member 421B and a power supply connection terminal 422B (external connection terminal) that extends downward from the third holding member 421B. The signal connector 43B includes a fourth holding member 431B and a signal connection terminal 432B that extends downward from the fourth holding member 431B. The first holding member 421A, the second holding member 431A, the third holding member 421B, the fourth holding member 431B, and the housing 40 are integrally molded of a resin material. The power supply connection terminal 422A, the signal connection terminal 432A, the power supply connection terminal 422B, and the signal connection terminal 432B are accommodated in the housing 40.

An electromagnetic shield 37 that covers the control units 1A and 1B is provided inside the housing 40. In the present embodiment, the electromagnetic shield 37 has a first top portion 37a, two second top portions 37b positioned below the first top portion 37a, and two connection portions 37c that connect the first top portion 37a and the two second top portions 37b to each other. The power supply connection terminal 422A, the signal connection terminal 432A, the power supply connection terminal 422B, and the signal connection terminal 432B are inserted into the through-hole 371 formed in the first top portion 37a.

The heat sink 34 is disposed inside the housing 40. The power module 35A is disposed on one side surface of the column portion 341 of the heat sink 34 in the second orthogonal direction Y. The power module 35B is disposed on the other side surface of the column portion 341 in the second orthogonal direction Y. That is, the power modules 35A and 35B are disposed with the column portion 341 sandwiched therebetween in the second orthogonal direction Y. In FIG. 15, the positions at which the power modules 35A and 35B are disposed are indicated by two-dot chain lines. In addition, although not shown, a first terminal connected to the control board 14A is provided at one end portion of the power module 35A in the first orthogonal direction X, and a second terminal connected to the bus bar unit 36A is provided at the other end portion. A first terminal connected to the control board 14B is provided at one end portion of the power module 35B in the first orthogonal direction X, and a second terminal connected to the bus bar unit 36B is provided at the other end portion.

The control board 14A is disposed on one side surface side of the column portion 341 in the first orthogonal direction X. The control board 14B is disposed on the other side surface side of the column portion 341 in the first orthogonal direction X. That is, the control boards 14A and 14B are disposed with the column portion 341 sandwiched therebetween in the first orthogonal direction X.

The capacitors 17b, 17c, and 17d of the filter 17A are disposed on an upper portion 141A of the control board 14A. The capacitors 17b, 17c, and 17d of the filter 17A are disposed between the first top portion 37a and the second top portion 37b in the axial direction Z. The capacitors 17b, 17c, and 17d of the filter 17B are disposed on an upper portion 141B of the control board 14B. The capacitors 17b, 17c, and 17d of the filter 17B are disposed between the first top portion 37a and the second top portion 37b in the axial direction Z.

A ground bus bar 38A is provided between the control board 14A and the electromagnetic shield 37. The ground bus bar 38A electrically connects the GND pattern 142A of the control board 14A and the electromagnetic shield 37. As in the first embodiment, the ground bus bar 38A is attached to the control board 14A by the first screw 60b and is attached to one second top portion 37b of the two second top portions 37b by the second screw 60a. The ground bus bar 38A may be fixed by the same method as in the second and third embodiments.

A ground bus bar 38B is provided between the control board 14B and the electromagnetic shield 37. The ground bus bar 38B electrically connects the GND pattern 142B of the control board 14B and the electromagnetic shield 37. As in the first embodiment, the ground bus bar 38B is attached to the control board 14B by the first screw 60b and is attached to the other second top portion 37b of the two second top portions 37b by the second screw 60a. The ground bus bar 38B may be fixed by the same method as in the second and third embodiments.

The bus bar unit 36A is disposed outside the control board 14A in the first orthogonal direction X. The bus bar base portion 361A of the bus bar unit 36A is disposed parallel to the control board 14A. The bus bar unit 36B is disposed outside the control board 14B in the first orthogonal direction X. The bus bar base portion 361B of the bus bar unit 36B is disposed parallel to the control board 14B.

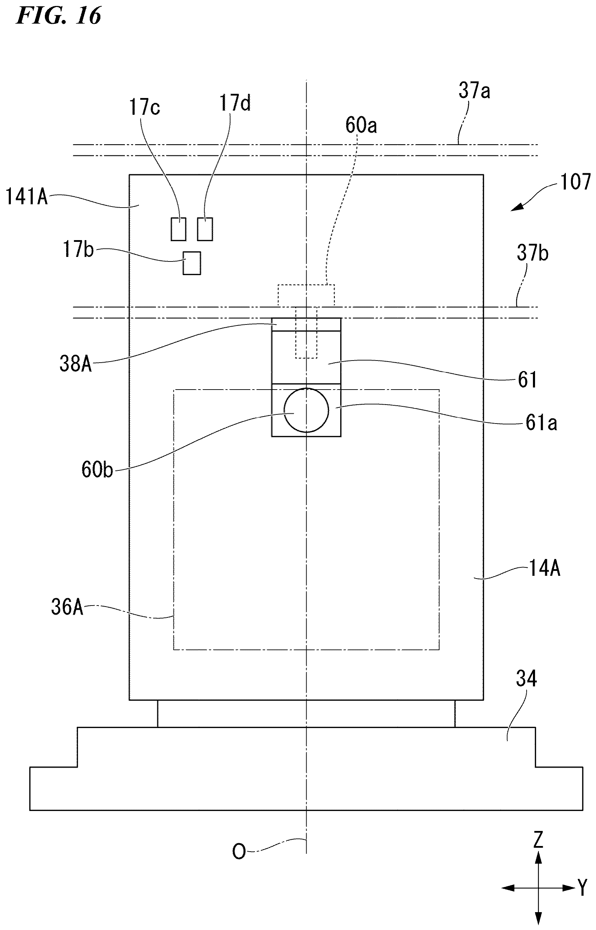

FIG. 16 is a view of the control board 14A as viewed in the first orthogonal direction X. In FIG. 16, the first top portion 37a and the second top portion 37b of the electromagnetic shield 37 are shown by a two-dot chain line. In addition, the second screw 60a is shown by a dotted line, and the bus bar unit 36A is shown by a one-dot chain line.

As shown in FIG. 16, the bus bar unit 36A is disposed to overlap the control board 14A when viewed in the first orthogonal direction X. The bus bar unit 36A is disposed to be spaced apart from a connection portion (that is, the first screw 60b) between the ground bus bar 38A and the control board 14A in the first orthogonal direction X, and is disposed to be spaced apart from a connection portion (that is, the second screw 60a) between the ground bus bar 38A and the electromagnetic shield 37 in the axial direction Z. Similarly, the bus bar unit 36B is disposed to overlap the control board 14B when viewed in the first orthogonal direction X. The bus bar unit 36B is disposed to be spaced apart from a connection portion between the ground bus bar 38B and the control board 14B in the first orthogonal direction X and is disposed to be spaced apart from a connection portion between the ground bus bar 38B and the electromagnetic shield 37 in the axial direction Z. Accordingly, the bus bar units 36A and 36B can be efficiently disposed inside the electromagnetic shield 37 while preventing the bus bar units 36A and 36B from coming into contact with the connection portions between the ground bus bars 38A and 38B and the control boards 14A and 14B and the connection portions between the ground bus bars 38A and 38B and the electromagnetic shield 37.

In addition, in the example of FIG. 16, the screws 60a and 60b are disposed such that the axis of the second screw 60a, the axis of the first screw 60b, and the axis O of the rotating shaft 21 are positioned on the same plane. As a result, the control boards 14A and 14B can be fixed to the electromagnetic shield 37 at the center in the second orthogonal direction Y by using the screws 60a and 60b, and the vibration resistance and the durability of the control boards 14A and 14B can be improved.

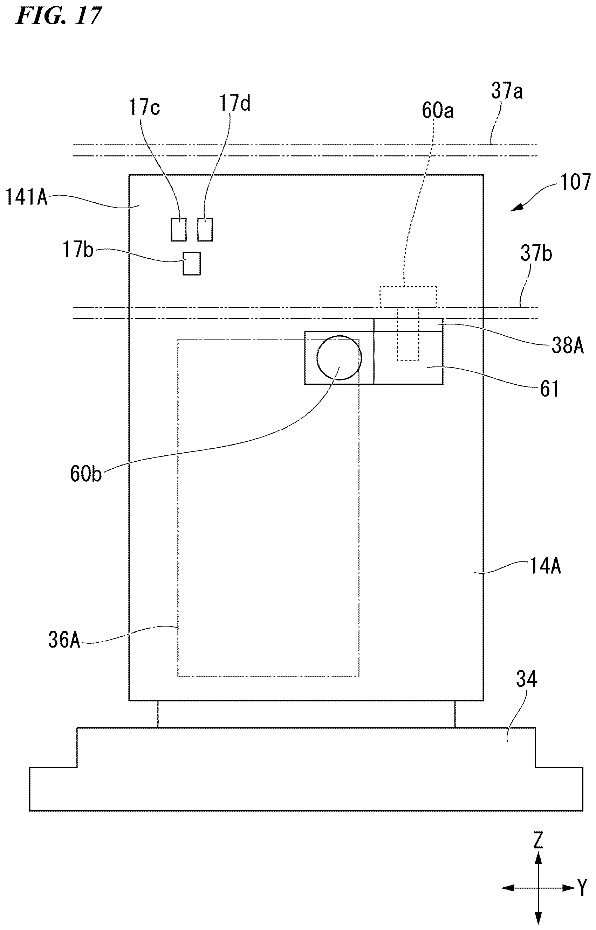

As shown in FIG. 17, the connection portion (that is, the first screw 60b) between the ground bus bar 38A and the control board 14A and the connection portion (that is, the second screw 60a) between the ground bus bar 38A and the electromagnetic shield 37 may be disposed at different positions in the second orthogonal direction Y. Similarly, the connection portion between the ground bus bar 38B and the control board 14B and the connection portion between the ground bus bar 38B and the electromagnetic shield 37 may be disposed at different positions in the second orthogonal direction Y. Even in this case, the bus bar units 36A and 36B are disposed to be spaced apart from the connection portion between the ground bus bars 38A and 38B and the control boards 14A and 14B, and the connection portion between the ground bus bars 38A and 38B and the electromagnetic shields 37. Therefore, the bus bar units 36A and 36B can be prevented from coming into contact with the connection portions. In addition, the degree of freedom of design is improved by adjusting the positions of the screws 60a and 60b as described above. Therefore, the bus bar units 36A and 36B can be more efficiently disposed inside the electromagnetic shield 37, and an increase in the size of the rotary electric device 107 can be limited.

### Ninth Embodiment.

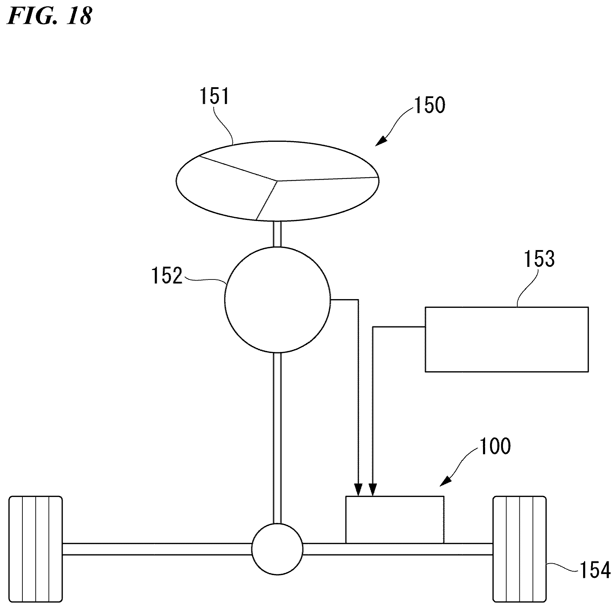

The rotary electric devices according to the first to eighth embodiments can be applied to an electric power steering device for a vehicle. Hereinafter, an electric power steering device 150 according to a ninth embodiment will be described with reference to FIG. 18. Components having the same functions and actions as those in the first embodiment are denoted by the same reference signs, and the description thereof will be omitted.

FIG. 18 is a schematic configuration diagram of the electric power steering device 150 according to the ninth embodiment. In the example shown in the drawing, the electric power steering device 150 is a rack type electric power steering device. The electric power steering device 150 includes the rotary electric device 100, a steering wheel 151, a torque sensor 152, and a speed sensor 153.

In a case where a driver operates the steering wheel 151 to generate a steering torque in the steering mechanism of the vehicle, the torque sensor 152 detects the steering torque and outputs the detected steering torque to the rotary electric device 100. In addition, the speed sensor 153 detects a traveling speed of the vehicle and outputs the detected traveling speed to the rotary electric device 100. The rotary electric device 100 generates an auxiliary torque that assists the steering torque based on the inputs from the torque sensor 152 and the speed sensor 153, and transmits the auxiliary torque to a steering mechanism of a front wheel 154 of the vehicle. The torque sensor 152 and the speed sensor 153 are parts of the sensors 8 or the like in FIG. 1. The rotary electric device 100 may generate the auxiliary torque based on information other than the torque sensor 152 and the speed sensor 153.

By reducing the size of the rotary electric device 100 applied to the electric power steering device 150, the mountability on the vehicle is improved. By reducing the cost of the rotary electric device 100, the cost of the entire electric power steering device 150 can also be reduced. The same applies to a case where the rotary electric devices 101 to 107 are used instead of the rotary electric device 100.

The technical scope of the present disclosure is not limited to the embodiment described above, and various modifications can be made without departing from the gist of the present disclosure.

For example, the rotary electric device 100 may be used for purposes other than the electric power steering device 150. In addition, the above-described embodiments or modification examples may be combined as appropriate.

### Reference Signs List

1, 1A, 1B Control unit
2 Rotary electric machine
17, 17A, 17B Filter
17a Normal mode coil (coil)
17b, 17c, 17d Capacitor
21 Rotating shaft
34 Heat sink
36, 36A, 36B Bus bar unit
37 Electromagnetic shield
37a First top portion
37b Second top portion
38, 38A, 38B Ground bus bar
39 Fastening target portion
40 Housing
60a Second screw
60b First screw
61 Resin holder (resin member)
100, 101, 102, 103, 104, 105, 106, 107 Rotary electric device
142, 142A, 142B GND pattern (wiring pattern)
150 Electric power steering device
361, 361A, 361B Bus bar base portion
422, 422A, 422B Power supply connection terminal (external connection terminal)
O Axis

## Claims

1. A rotary electric device comprising:
a rotary electric machine including a rotating shaft;
a control unit disposed side by side with the rotary electric machine in an axial direction along an axis of the rotating shaft and configured to control the rotary electric machine; and
an electromagnetic shield covering the control unit,
wherein the control unit includes
a control board extending in the axial direction, an external connection terminal being connected to the control board, and
a filter configured to attenuate a noise component to be propagated to the external connection terminal,
the electromagnetic shield is formed in a tubular shape covering the entire control board and including a first top portion provided with a through-hole into which the external connection terminal is inserted, and a second top portion disposed closer to the rotary electric machine than the first top portion, and
at least a part of the filter is mounted on the control board and is disposed between the first top portion and the second top portion in the axial direction.

2. The rotary electric device according to claim 1,
wherein the filter includes a wiring pattern formed on the control board and electrically connected to the external connection terminal, and
the control unit includes a ground bus bar electrically connecting the wiring pattern and the electromagnetic shield.

3. The rotary electric device according to claim 2, further comprising:
a heat sink disposed inside the electromagnetic shield,
wherein the control unit includes
a first screw fixing the ground bus bar and the control board to the heat sink, and
a resin member disposed between the ground bus bar and the first screw.

4. The rotary electric device according to claim 3,
wherein the resin member, the ground bus bar, the control board, and the heat sink are disposed in this order toward the axis of the rotating shaft in a direction along an axis of the first screw.

5. The rotary electric device according to any one of claims 2 to 4,
wherein the control unit includes a second screw fixing the ground bus bar to the second top portion.

6. The rotary electric device according to claim 5,
wherein the control unit includes a fastening target portion provided such that the ground bus bar is sandwiched between the second top portion and the fastening target portion, the second screw being fastened to the fastening target portion.

7. The rotary electric device according to claim 5 or 6,
wherein the ground bus bar and the second top portion are disposed side by side in the axial direction.

8. The rotary electric device according to claim 2,
wherein the ground bus bar is joined to the wiring pattern by soldering and is in pressing contact with the second top portion.

9. The rotary electric device according to claim 8,
wherein the ground bus bar is elastically deformed to be in pressing contact with the second top portion.

10. The rotary electric device according to any one of claims 1 to 7,
wherein the control unit includes
a ground bus bar,
a first screw attaching the ground bus bar to the control board, and
a second screw attaching the ground bus bar to the second top portion, and
an axis of the first screw and an axis of the second screw are disposed on the same plane including the axis of the rotating shaft.

11. The rotary electric device according to any one of claims 1 to 7,
wherein the control unit includes
a ground bus bar,
a first screw attaching the ground bus bar to the control board, and
a second screw attaching the ground bus bar to the second top portion, and
an axis of the second screw is disposed on a first plane including the axis of the rotating shaft, and an axis of the first screw is disposed on a second plane parallel to the first plane.

12. The rotary electric device according to claim 10 or 11,
wherein the axis of the first screw is disposed perpendicular to the control board, and the axis of the second screw is disposed perpendicular to the second top portion.

13. The rotary electric device according to any one of claims 2 to 12,
wherein the control unit includes a bus bar base portion disposed to be parallel to the control board, a part of the filter is mounted on the bus bar base portion, and
the bus bar base portion is disposed to be spaced apart from a connection portion between the ground bus bar and the control board.

14. The rotary electric device according to any one of claims 1 to 13, further comprising:
a housing accommodating the external connection terminal and covering the electromagnetic shield.

15. The rotary electric device according to any one of claims 1 to 14,
wherein the filter includes a capacitor, and
the capacitor is mounted on the control board and is disposed between the first top portion and the second top portion in the axial direction.

16. The rotary electric device according to any one of claims 1 to 14,
wherein the filter includes a capacitor and a coil, and
the capacitor and the coil are mounted on the control board and are disposed between the first top portion and the second top portion in the axial direction.

17. The rotary electric device according to claim 15 or 16,
wherein the capacitor is provided such that the entire capacitor is disposed closer to the first top portion than the second top portion.

18. The rotary electric device according to claim 15 or 16,
wherein the capacitor is provided such that a position of a side surface of the capacitor coincides with a position of an outer surface of the second top portion in the axial direction.

19. The rotary electric device according to claim 15 or 16,
wherein the capacitor is provided to overlap an outer surface of the second top portion in the axial direction.

20. An electric power steering device comprising:
the rotary electric device according to any one of claims 1 to 19.
